Europäisches Patentamt

(19) European Patent Office    (11) Publication number: **0 209 261**
**B1**
Office européen des brevets

(12) # EUROPEAN PATENT SPECIFICATION

(45) Date of publication of the patent specification:
29.11.89

(51) Int. Cl.⁴: **C10J 3/46**

(21) Application number: 86304737.9

(22) Date of filing: 19.06.86

(54) Partial oxidation process.

(30) Priority: 27.06.85 US 749375
27.06.85 US 749376

(43) Date of publication of application:
21.01.87 Bulletin 87/4

(45) Publication of the grant of the patent:
29.11.89 Bulletin 89/48

(84) Designated Contracting States:
BE DE FR GB IT NL SE

(56) References cited:
DE-A- 2 718 404
DE-A- 3 342 383
GB-A- 712 929
GB-A- 2 003 496
US-A- 2 971 830

(73) Proprietor: TEXACO DEVELOPMENT CORPORATION,
2000 Westchester Avenue, White Plains New
York 10650(US)

(72) Inventor: Najjar, Mitri Salim, RD. 9, Box 49 Country Club
Road, Hopewell Jnct. N.Y. 12533(US)

(74) Representative: Ben-Nathan, Laurence Albert et al,
Urquhart-Dykes & Lord 91 Wimpole Street, London
W1M 8AH(GB)

## Description

This invention relates to the partial oxidation of ash-containing heavy liquid hydrocarbonaceous fuels, ash-containing petroleum coke, or mixtures thereof to produce gaseous mixtures comprising $H_2+CO$. More particularly, it pertains to an additive system for removing nickel and vanadium-containing contaminants along with other molten ash components which are produced during the partial oxidation of a heavy liquid hydrocarbonaceous fuel having a nickel and vanadium-containing ash, petroleum coke having a nickel and vanadium-containing ash, or mixtures thereof, to produce synthesis gas, reducing gas, or fuel gas.

The partial oxidation of liquid hydrocarbonaceous fuels such as petroleum products and slurries of solid carbonaceous fuels such as coal and petroleum coke are well known processes. The foreseeable trend for petroleum reserves is that the produced crude will be increasingly heavier and of poorer quality. To compensate for this trend, refiners must employ more "bottom of the barrel" upgrading to provide the desired light products. The current industry workhorse to provide this upgrading is some type of coking operation (either delayed or fluid). A good deal of current refinery expansion includes the installation or expansion of coker units, and thus, coking will be a process of general use for some time to come.

A major drawback for coking is the disposal of the product coke. With a reasonably clean coker feed, the product coke has been substituted for applications requiring only relatively pure carbon, such as electrode manufacture. However, with the feed crudes becoming poorer, there are compounding factors affecting coker operations. First, since the crudes contain more contaminants, i.e. sulfur, metals (predominately vanadium, nickel and iron), and ash, and these contaminants are concentrated in the product coke, this coke is of a much poorer quality and is excluded from its normal product applications. Second, because the crudes are heavier, i.e., contain more coke precursors, more of this poorer quality coke is produced from each barrel of ash-containing heavy liquid hydrocarbonaceous fuel. The manufacture of petroleum coke pellets by a delayed coking process is described in U.S. Patent No. 3,673,080. A fluid coking process is described in U.S. Patent No. 2,709,676.

The Texaco partial oxidation gasification process offers an alternative processing route for the coke or the ash-containing heavy liquid hydrocarbonaceous fuel. For example, water slurries of petroleum coke are reacted by partial oxidation in U.S. Patent No. 3,607,157. Gasification is often cited as a convenient means of coke disposition. The Flexicoking Process is an integrated coker/gasifier operation but has been criticized because of the gasifier design. Further, no molten petroleum coke ash having a reduced ash fusion temperature is produced. The decision to use gasification as a coke disposal means is generally based on economics. The expected rise in energy costs and legislation requiring total use of feed crude should shortly bring about a great utilization of petroleum coke feeds to the partial oxidation gas generator.

Previous gasification runs with delayed coke and ash-containing heavy liquid hydrocarbonaceous fuel gave rise to some unexpected operating problems. The ash, which normally melts and is discharged from the gasifier as a slag, was not melting completely and being discharged but was building up on the walls of the refractory. Vanadium and nickel constituents of the ash in said materials collected on the gasifier walls and formed oxides during shut-down. Upon subsequent exposure of the gasifier walls to air these deposits involving vanadium can catch fire with vanadium converting to the lower melting $V_2O_5$ or metal vanadate states. The strong solvent action of vanadium oxide on the refractory lining contributed to the clogging of the outlet in the bottom of the gasifier. Nickel impurities may under certain conditions form troublesome nickel carbonyl deposits downstream in the system. Fluxing as used in coal operations and in U.S. Patent Nos. 1,799,885 and 2,644,745 do not provide a solution to these problems with vanadium and nickel. One object of the present invention is to make possible an extended operation of the partial oxidation gas generator without any shut-down caused by failure of the refractory lining in the reaction zone that was brought about by the presence of vanadium.

According to a first aspect of the present invention, there is provided a process for the production of gaseous mixtures comprising $H_2+CO$ by the partial oxidation of a feedstock comprising a heavy liquid hydrocarbonaceous fuel having a nickel- and vanadium-containing ash or petroleum coke having a nickel- and vanadium-containing ash, or mixtures thereof; and said feedstock includes a minimum of 0.5 wt. % of sulfur; and said ash includes a minimum of 5.0 wt. % vanadium, a minimum of 2.0 wt. % of nickel, and silicon; said process being characterized by the steps of:

(1) mixing together with said feedstock, additive A comprising an iron-containing additive when the silicon content of said ash is less than about 350 ppm, or additive B comprising an iron- and calcium-containing additive when the silicon content of said ash is about 400 ppm or more; wherein the weight ratio of additive A or B to ash in the reaction zone in (2) is in the range of 1.0-10.0 to 1.0, and for each part by weight of vanadium there is at least 10 parts by weight of iron when additive A is used, or at least 10 parts by weight of iron plus calcium when additive B is used;

(2) reacting said mixture from (1) at a temperature in the range of 1200°C to 1650°C(2200°F to 3000°F) and a pressure in the range of 0.51 to 25.3 MPa (5 to 250 atmospheres) in a free-flow refractory-lined partial oxidation reaction zone with a gas which contains free oxygen in the presence of a temperature moderator and in a reducing atmosphere to produce a how raw effluent gas stream comprising $H_2$+CO and entrained molten slag; and where in said reaction zone when additive A is used said iron-containing additive combines with at least a portion of said nickel constituents and sulfur found in the feedstock to produce a liquid phase washing agent that collects and transports at least a portion of the vanadium-containing oxide laths and spinels and other ash components and refractory out of the reaction zone; and when additive B is used separate portions of said iron- and calcium-containing additive (I) combine with a portion of said nickel, calcium and sulfur to generate a liquid phase washing agent that collects and transports a portion of the vanadium-containing oxide laths and spinels and other ash components and refractory; and (II) combine with a portion of said nickel, calcium and silicon to generate a liquid oxide-silicate phase that fluxes substantially all of the remaining portion of said vanadium-containing oxide laths and spinels and other ash components;

(3) separating non-gaseous materials from said hot raw effluent gas stream.

According to a second aspect of the present invention, there is provided a process for the production of gaseous mixtures comprising $H_2$+CO by the partial oxidation of a feedstock comprising a heavy liquid hydrocarbonaceous fuel having a nickel- and vanadium-containing ash or petroleum coke having a nickel- and vanadium-containing ash, or mixtures thereof; and said feedstock includes a minimum of 5.0 wt. % vanadium, a minimum of 2.0 wt. % of nickel, and silicon; said process comprising:

(1) mixing together, with said feedstock, additive A comprising an iron-containing additive when the silicon content of said ash is less than about 350 ppm, or additive B comprising an iron- and calcium-containing additive when the silicon content of said ash is about 400 ppm or more; wherein the weight ratio of additive A or B to ash in the reaction zone in (2) is in the range of 1.0-10.0 to 1.0, and for each part by weight of vanadium there is at least 10 parts by weight of iron when additive A is used, or at least 10 parts by weight of iron plus calcium when additive B is used;

(2) coking said mixture from (1) to produce petroleum coke having a nickel- and vanadium-containing ash and having dispersed therein said additive A or B;

(3) introducing the petroleum coke from (2) into a partial oxidation reaction zone as a pumpable slurry of petroleum coke in water, liquid hydrocarbonaceous fluid or mixtures thereof, or as substantially dry petroleum coke entrained in a gaseous transport medium;

(4) reacting said petroleum coke from (3) at a temperature in the range of 1200°C to 1650°C (2200°F to 3000°F) and a pressure in the range of 0.51 to 25.3 MPa (5 to 250 atmospheres) in said free-flow refractory-lined partial oxidation reaction zone with a gas containing free oxygen in the presence of a temperature moderator and in a reducing atmosphere to produce a hot raw effluent gas stream comprising $H_2$ + CO and entrained molten slag; and where in said reaction zone when additive A is used said iron-containing additive combines with at least a portion of said nickel constituents and sulfur found in the feedstock to produce a liquid phase washing agent that collects and transports at least a portion of the vanadium-containing oxide laths and spinels and other ash components and refractory out of the reaction zone; and when additive B is used separate portions of said iron- and calcium-containing additive (I) combine with a portion of said nickel, calcium and sulfur to generate a liquid phase washing agent that collects and transports a portion of the vanadium-containing oxide laths and spinels and other ash components and refractory; and (II) combine with a portion of said nickel, calcium and silicon to generate a liquid oxide-silicate phase that fluxes substantially all of the remaining portion of said vanadium-containing oxide laths and spinels and other ash components; and

(5) separating non-gaseous materials from said hot raw effluent gas stream.

A small amount of an additional additive, selected from the group of elements consisting of magnesium, chromium, and mixtures thereof in the form of compounds such as oxides, may be introduced into the reaction zone. The magnesium and chromium further increase the life of the refractory lining.

The partial oxidation of heavy liquid hydrocarbonaceous fuel and petroleum coke are described respectively in U.S. Patent Nos. 4,411,670 and 3,607,156. Further, suitable free-flow refractory-lined gas generators and burners that may be used in the production of synthesis gas, reducing gas, or fuel gas from these materials are also described in the aforesaid references. Advantageously, the subject process uses relatively inexpensive feedstocks comprising heavy liquid hydrocarbonaceous fuel and/or petroleum coke feedstocks having nickel- and vanadium-containing ashes. Further, said feedstock includes a minimum of 0.5 wt. % of sulfur, such as at least 2.0 wt. % sulfur; and said ash includes a minimum of 5.0 wt. % of vanadium, a minimum of 2.0 wt. % of nickel, such as 2.0 to 5.0 wt. %, and silicon.

By definition, the term heavy liquid hydrocarbonaceous material or fuel having a nickel- and vanadium-containing ash is a petroleum or coal derived fuel selected from the group consisting of virgin crude, residua from petroleum distillation and cracking, petroleum distillate, reduced crude, whole crude, asphalt, coal tar, coal derived oil, shale oil, tar sand oil, and mixtures thereof.

By definition, the term petroleum coke having a nickel- and vanadium-containing ash is petroleum coke made from ash containing heavy liquid hydrocarbonaceous fuel by conventional coking methods such as by the delayed or fluid coking process, such as described in U.S. Patent No. 3,673,080.

Closer study of the ashes derived from the partial oxidation, without an additive, of a feedstock comprising heavy liquid hydrocarbonaceous fuels and/or petroleum coke having nickel- and vanadium-containing ashes shows that they are largely composed of oxide and sulfide compounds of vanadium, nickel, iron, along with some normally occurring mineral matter species. Also present are vanadiumcontaining oxide laths selected from the group consisting of V, V+Ca, V+Fe, V+Al, and mixtures thereof, as well as vanadium-containing spinels of the spinel-type aluminate phases with any metals selected from the group consisting of V, Fe, Cr, Al, Mg and mixtures thereof. The presence of abundant interlocking needle to lath-like crystals is the cause of the high viscosity of the slag.

The metals present in the ash provide a system that is significantly different from that occurring in coal. A further factor is that the total ash content of the petroleum coke or heavy liquid hydrocarbonaceous fuel may be only about 0.5 to 5 weight percent (wt.%), whereas coal typically contains 10-20 wt. % ash. The comparatively low ash concentration in petroleum coke and heavy liquid carbonaceous fuel may be the reason why the ash removal problem is only noticed after prolonged gasifier runs. The opportunity for the effective ash and additive mixing which is necessary for washing the vanadium constituents out of the reaction zone, and for effective fluxing, is therefore greatly reduced.

It is theorized that in the heavy liquid hydrocarbonaceous material and petroleum coke systems, a good deal of the ash material is liberated as individual molecular species. This is because, upon vacuum distillation or coking, the metallic species in the crude, which are generally presented as porphyrin type structures (metal atoms, oxides or ions thereof confined in an organic framework), are entrapped within the collapsed carbon matrix.

Problems arise when the heavy metal constituents build up in the system. In particular, vanadium and nickel are known to accumulate on the walls of the refractory-lined reaction zone of the partial oxidation gas generator and not flow smoothly from the gasifier under normal gasifier conditions. During shutdown and subsequent exposure of the gasifier walls to air, these deposits involving vanadium can catch fire with the vanadium converting to the lower melting $V_2O_5$ or metal vanadate states. These materials prove to be very corrosive to refractory, thereby decreasing the life of the refractory lining of the reaction zone. These problems and others are minimized by the subject process in which the amounts of vanadium constit-uents remaining in the reaction zone are substantially reduced or eliminated.

This invention involves the use of an iron-containing additive. More particularly, it is proposed to employ the above-mentioned additive A when the feedstock in use yields an ash with a silicon content of less than about 350 ppm, and the above-mentioned additive B when the feedstock in use yields an ash with a silicon content of about 400 ppm or more. Further, a means of introducing these additives (otherwise called "addition agents") into the system to give maximum effectiveness is provided.

Operation of the process on low silicon feedstocks using additive A will now be described in greater detail.

The iron-containing additive A comprises an iron compound, preferably iron oxide. In the reaction zone of the partial oxidation gas generator, the additive combines with at least a portion, such as substantially all or a large fraction e.g. 40 to 100 wt. %, for example 70 to 90 wt. % of the nickel constituents and sulfur found in the feedstock to produce a low viscosity liquid phase washing agent or carrier. Advantageously, the sulfur potential in the gas and downstream gas cleaning costs are substantially reduced or possibly eliminated. This washing agent in the liquid phase at the temperature prevailing in the reaction zone and substantially comprises in wt. %: iron sulfide 75 to 95, such as 80 to 90; nickel sulfide 0.5 to 3, such as 1 to 2; and iron oxide 2 to 9, such as 3 to 6. The viscosity of this washing agent at 1093°C (2000°F) is in the range of 1 to 2 Ns/m² (10 to 20 poises) (1 poise = 100 mNs/m²). Further, it was unexpectedly found that this liquid phase washing agent has a strong wetting capability for the high temperature non-flowing vanadiumcontaining oxide laths and spinels. This washing agent functions in a completely different manner than that of a fluxing additive which may be used for example to solubilize slag constituents in coal. For example, this washing agent does not solubilize the troublesome vanadium-containing oxide laths and spinels. Rather, it serves as a carrier and washes them out of the reaction zone. This washing agent washes at least a portion, such as from 40 to 100 wt. %, such as 60 to 80 wt. %, and preferably all, of the vanadium-containing contaminants out of the reaction zone of the partial oxidation gas generator. The mixture of this liquid phase washing agent and vanadium oxide is referred to herein as slag and comprises 1 to 10 wt. % such as 4 to 8 wt. % of vanadium oxide. Further, it was unexpectedly found that high silicon e.g. greater than about 350 ppm would interfere with the formation of the liquid phase washing agent in the partial oxidation reaction zone.

It was unexpectedly found that other benefits could be achieved by including, in the iron-containing additive, an additional material selected from the group of elements consisting of magnesium, chromium, and mixtures thereof. The elements are provided as suitable compounds selected from the groups consisting of oxides, hydroxides, carbonates, bicarbonates, sulfates, nitrates and mixtures thereof. The total amount of the compounds of magnesium, chromium, and mixtures thereof in the additive may be in the range of 1.0 to 10.0 wt. %, such as 2.0 to 8.0 wt..% of the additive. The addition of the aforesaid supplemental amount of magnesium and/or chromium compound saturates the slag with respect to these constituents thereby preventing their dissolution from the refractory. The life of the refractory lining is thereby extended.

A suitable amount of iron-containing additive is introduced into the reaction zone along with the fuel feedstock in order to satisfy the following two ratios: (i) a wt. ratio of iron-containing additive to ash (noncombustible material) in the reaction zone in the range of about 1.0 - 10.0 to 1.0, such as at least 2:1 weight ratio, for example about 5.0 parts by wt. % of iron-containing additive per part by wt. of ash in the feedstock; and (ii) at least 10 parts by weight, such as 10-30, for example 20 parts by weight of iron for each part by weight of vanadium.

Advantageously by the subject process, the molten slag which is produced in the reaction zone has a low viscosity e.g. less than 2 Ns/m$^2$ (20 poises) at 1093°C (2000°F), in comparison with prior art high viscosity slag. This facilitates slag removal. Further, at shut-down of the gasifier, the refractory walls of the reaction zone are provided clean with substantially no net accumulation of vanadium contaminants.

The partial oxidation reaction takes place in a reducing atmosphere under the following conditions: temperature:- from 1200°C to 1650°C (from 2200°F to 3000°F), such as 1260°C to 1480°C about 2300°F to 2700°F) for example 1500°C to 1550°C (about 2725°F to 2825°F); pressure:- from 0.51–25.3 MPa (5 to 250 atmospheres), such as 1.52 to 20.3 MPa (15 to 200 atmospheres). When steam or water is used as a temperature moderator the H$_2$0/fuel weight ratio should be in the range of about 0.1 to 5.0, such as 0.2 to 0.9; and atomic ratio of free oxygen to carbon in the fuel (O/C ratio) should be in the range of 0.6 to 1.6, such as 0.8 to 1.4.

The composition of the hot, raw effluent gas stream directly leaving the reaction zone of the free-flow partial oxidation gas generator is about as follows, in mole percent: H$_2$:- 10 to 70; CO:- 15 to 57; C0$_2$:- 0.1 to 25; H$_2$0:- 0.1 to 20; CH$_4$:- nil to 60; H$_2$S:- nil to 2; COS:- nil to 0.1; N$_2$:-nil to 60; and Ar:- nil to 2.0. Particulate carbon is present in the range of 0.2 to 20 weight % (basis carbon content in the feed). Ash is present in the range of 0.5 to 5.0 wt. %, such as 1.0 to 3.0 wt. % (basis total weight of fuel feed). Depending on the composition after removal of the entrained particulate carbon and ash by quench cooling and/or scrubbing with water and with or without dewatering the gas stream may be employed as synthesis gas, reducing gas or fuel gas.

The iron-containing additive may have fortuitous catalytic properties in addition to its utility in the generation of the washing agent, as previously described. For example, it may act to produce more and/or a better quality of light products from the coker operation. It may also aid in the gasification reactions either by increasing the reaction rate and thus the throughput capacity of the gasifier or by increasing the conversion of the soot and thus the overall efficiency of the process. Again, however, this invention does not depend on the catalytic properties of the iron-containing additive.

It was unexpectedly found that a preferred iron-containing additive for mixing with the heavy liquid hydrocarbonaceous material having a nickel- and vanadium-containing ash or petroleum coke having a nickel- and vanadium-containing ash includes iron compounds selected from the group consisting of oxides, sulfates, carbonates, cyanides, chlorides, nitrates, and mixtures thereof. As the iron compound, water soluble iron salts are useful. The iron compound can be a ferro or ferri organic compound selected from the group consisting of naphthenates, oxalates, acetates, citrates, benzoates, oleates, tartrates, and mixtures thereof. The additive A should be finely ground, that is, comminuted.

In one operation of the process described herein, the aforesaid mixture of fuel feedstock comprising heavy liquid hydrocarbonaceous fuel having a nickel- and vanadium-containing ash and/or petroleum coke having a nickel- and vanadium-containing ash are introduced, together with the iron-containing additive into the partial oxidation gasifier. In another operation, the iron-containing additive is mixed with the heavy liquid hydrocarbonaceous material having a nickel- and vanadium-containing ash and the mixture is then fed into a conventional coking unit to produce petroleum coke. By this means, the finely ground iron-containing additive may be intimately mixed throughout the petroleum coke product. The preferable particle size of the comminuted iron-containing additive and the comminuted petroleum coke is in the range of ASTM E-11 Standard Sieve Designation 210 micronmeters to 37 micronmeters, or smaller. The ingredients of the aforesaid mixtures may be separately ground and then mixed together. Alternatively, the ingredients may be wet- or dry-ground together. Intimate mixing of the solid materials is thereby achieved, and the particle sizes of each of the solid materials in the mixture may be substantially the same. The dry-ground mixture may be mixed with water or a liquid hydrocarbonaceous material or both to produce a pumpable slurry having a solids content in the range of 50-65 wt. %. Alternatively, the solid materials may be wet-ground with the liquid slurry medium. Alternatively, the mixture of particulate solids may be entrained in a gaseous medium and then introduced into the gas generator. The gaseous transport medium may be selected from the group consisting of steam, C0$_2$, N$_2$, free-oxygen containing gas, recycle synthesis gas, and mixtures thereof.

In the aforesaid mode of operation wherein comminuted iron-containing additive is mixed with the heavy liquid hydrocarbonaceous fuel having a nickel- and vanadium-containing ash and fed into a coker, the additive may be introduced directly into the ash-containing petroleum liquid feed to the vacuum distillation tower, which normally precedes the coker unit. In either unit operation (coking or distillation), substantially all of the iron-containing additive should stay behind in the desired bottoms stream. In other words, there should be little, if any, carryover of the additive with the lighter products. A possible advantage for mixing the additive with the vacuum tower feedstream in preference to the bottoms stream (i.e. coker feed) is that the feed to the vacuum tower is significantly less viscous than the bottoms from the vacuum tower. A more thorough mixing may be thereby effected.

For example, a mixture comprising a high-boiling liquid petroleum i.e. heavy liquid hydrocarbonaceous fuel having a nickel- and vanadium-containing ash and the comminuted iron-containing additive at a temperature in the range of 340°C to 500°C (about 650°F to 930°F) is introduced into a delayed coking zone, for example by way of line 33, such as shown and described in U.S. Patent No. 3,673,080. At a temperature in the range of 430°C to 480°C (about 800°F to 895°F) and a pressure in the range of 3.30 to 9.93 bar (about 20 to 60 psig), uncondensed hydrocarbon effluent vapour and steam are removed overhead and petroleum coke in admixture with iron-containing additive is removed from the bottom of said delayed coking zone.

In another mode of operation, a mixture comprising a high-boiling liquid petroleum having a nickel- and vanadium-containing ash and the comminuted iron-containing additive at a temperature in the range of 290°C to 400°C (about 550°F to 750°F) is introduced into a fluidized bed coking zone for example by way of line 31, such as shown and described in U.S. Patent No. 2,709,676. At a temperature in the range of 540°C to 650°C(about l000°F to 1200°F) and a pressure in the range of 1.65 to 3.30 bar (about 10 to 20 psig), uncondensed hydrocarbon effluent vapour and steam are removed overhead and said petroleum coke is removed from the bottom of said coking zone.

In other modes of operation, the present invention may be applied to other similar petroleum processes that produce a stream suitable for gasification. Any "bottom of the barrel" process that does not upgrade the bottoms or residue stream to extinction must ultimately produce such a stream. These streams, either liquid or normally solid but pumpable at elevated temperatures, will produce the same gasification problems as discussed for coke. Thus, the concept of introducing an iron-containing additive as part of the petroleum processing prior to gasification should, depending on the specific process, produce a feedstock that will be free of the gasification problems mentioned above. Most of these processes employ vacuum distillation as pre treatment. Accordingly, as described above, the iron-containing addition agent may be mixed with the vacuum distillation feed having a nickel and vanadium-containing ash. The additive will then emerge from the distillation column in the bottoms stream. In turn, the bottoms stream is the feed stream for the upgrading process. This incorporation of the iron-containing additive should not adversely affect these processes, and the iron-containing addition agent should ultimately emerge with the vanadium-rich residue stream from each respective process. In all of these processes, this residue stream should be suitable for gasification by partial oxidation.

During study of the use of additive A, it was unexpectedly found that the softening temperature of the additive could be reduced by 56 - 167°C(about 100-300°F), such as about 111°C (about 200°F), by mixing a calcium compound with the previously described feedstock, e.g. petroleum coke, liquid hydrocarbonaceous fuel, or mixtures thereof. The calcium compound may be selected from the group consisting of calcium oxide, calcium carbonate and calcium hydroxide. By adding calcium in this manner, the partial oxidation gas generator may be started up at a lower temperature e.g. 111 - 167°C (about 200 to 300°F) lower. The calcium compound is temporarily introduced into the partial oxidation reaction zone at start-up in admixture with the feedstock and/or iron-containing addition agent in the critical amount of 2.0 to 8.0 wt. % or below of the weight of additive A. The calcium compound will lower the softening temperature of the additive, thus enhancing the rate of sulfur pick-up in the slag. It was found that when the addition of calcium compound exceeded 8.0 wt. % of additive A then calcium sulfide and calcium carbonate would clog up the central passage of the dip tube thereby blocking the discharge of the hot effluent gas stream from the reaction zone into the quench water.

Shortly after start-up when the sulfur begins to transfer into the molten slag, the liquid sulfide slag of iron and nickel will lower the softening temperature of the iron-containing agent thus eliminating thereafter the need of introducing calcium. Excess calcium will pick up the sulfur to form an undesirable viscous sulfide phase. Keeping the amount of calcium to 8.0 wt. % and below of the iron-containing addition agent will ensure the washing of the high-melting calcium sulfide phase with the high-melting vanadium laths and spinels. The use of calcium in this manner in admixture with the iron-containing additive is substantially different from its use as an ash fluxant, as described in U.S. Patent No. 4,277,365.

The following Example I is offered as a better understanding of the present invention in relation to low silicon feedstocks, but the invention is not to be construed as limited thereto.

EXAMPLE I

Synthesis gas substantially comprising in mole % dry basis $H_2$ 25 to 45, CO 20 to 50, $CO_2$ 5 to 35, $CH_4$ 0.06 to 8.0, and $CO_2+H_2S$ 0.1 to 2.0 is produced in a free-flow refractory lined partial oxidation reaction zone, such as that shown and described in U.S. Patent No. 3,607,157. The feedstock comprises an atomized aqueous dispersion or a dispersion of substantially dry petroleum coke having a nickel and vanadium-containing ash and being entrained in a gaseous transport medium comprising of a mixture of free-oxygen containing gas and steam. The ash in the petroleum coke comprises about 12.0 wt. % of vanadium, about 5.0 wt. % of nickel, and contains less than about 250 ppm of silicon. About 3.2 wt. % of sulfur is present in the petroleum coke. The petroleum coke has a nickel and vanadiumcontaining ash and also has uniformly dispersed therein an iron-containing additive comprising about 100 wt. % of iron oxide. The weight ratio of iron-containing additive to ash is about 5 to 1. The weight ratio of iron to vanadium in the reaction zone is about 16 to 1. In another run the petroleum coke having a nickel and vanadium-containing ash and being in admixture with the iron and calcium-containing additive is introduced into the free-flow partial oxidation zone as a pumpable slurry of petroleum coke in water. The solids content of the slurry is about 60 weight percent.

The petroleum coke is reacted with a free-oxygen containing gas e.g. air, oxygen-enriched air, substantially pure oxygen, in the presence of a temperature moderator, e.g. $H_2O$, $CO_2$, $N_2$, in the refractory-lined partial oxidation reaction zone at an autogenous temperature of about 1510°C (about 2750°F) and a pressure of about 0.61 MPa (6 atmospheres). The molten slag droplets are readily separated from the hot effluent gas stream leaving the reaction zone by gravity or by quenching and/or scrubbing the gas stream with water or other gas scrubbing medium. The ash fusion temperature for the liquid washing agent and associated ash was below 1150°C (2100°F). In comparison, the ash fusion of the coarse slag with no iron-containing additive was greater than 1510°C (2750°F). The chemical composition of the slag is shown in Table I below.

Table I – Chemical Composition of Slag

| Slag Type (produced from) | FeS | NiS | FeO | CaO | CaS | $SiO_2$ | $V_2O_3$ | Others[1] |
|---|---|---|---|---|---|---|---|---|
| Liquid Phase Washing Agent | 81.1 | 1.2 | 4.1 | 0.8 | 1.2 | 1.1 | 6.3 | 4.2 |

[1]Minor ash components and refractory pick-up.

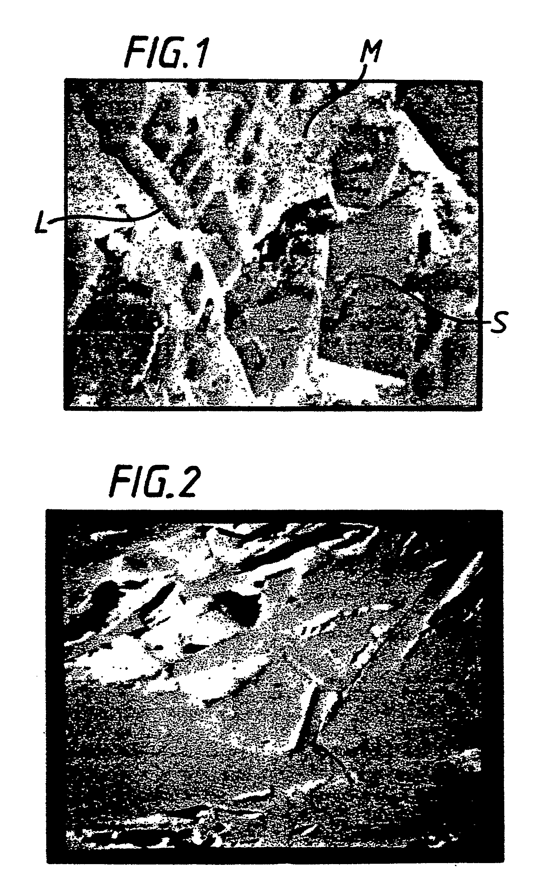

The accompanying Figure 1 is a photomicrograph (enlarged 500x) of a cross-section typical of the slag produced from the liquid phase washing agent and illustrating the undissolved vanadium-containing oxide laths L and spinels S in a matrix of liquid phase washing agent M.

Operation of the process on feedstocks of higher silicon content is similar, such that what has been stated above in relation to the use of additive A on low silicon feedstocks also applies generally to use of additive B on higher silicon feedstocks. Further description of the use of additive B is given below.

The "higher silicon" feedstocks contemplated are those with a silicon content of more than 350 ppm, that is, about 400 ppm and above, such as from 400 to 5000 ppm, for example in a range of from 450 to 1000 ppm.

The use of additive B containing both iron and calcium, has the unexpected effect of producing two slag phases, namely the aforesaid washing phase and, in addition, an oxide/silicate phase which fluxes ash constituents of the feedstock. Additive B thus functions in a dual manner.

It is stated above that high silicon contents would interfere with the formation with additive A of the liquid phase washing agent. With additive B, however, it was found unexpectedly that this interference from the high silicon content is no longer present.

The iron and calcium-containing additive comprises 30.0 to 90.0 wt. %, such as 50.0 to 80.0 wt. % of an iron compound, preferably iron oxide, and the remainder may substantially comprise a calcium compound, preferably calcium oxide. For example, there may be 10 to 70 wt. %, such as 20 to 50 wt. % of calcium oxide in the iron and calcium-containing additive. In the reaction zone of the partial oxidation gas generator, a first portion of the additive e.g. 10-90 wt. %, such as 25-75 wt. % of the additive combines with a large fraction e.g. 40 to 95 wt. %, say 70 to 90 wt. % of the nickel constituents and sulfur found in the feedstock to produce a low viscosity liquid phase washing agent or carrier. Advantageously, and as with additive A described above, the sulfur potential in the gas and downstream gas cleaning costs are substantially reduced or possibly eliminated. This washing agent is, as with additive A, in the liquid phase at the temperature prevailing in the reaction zone and substantially comprises in wt. %: iron sulfide 75 to 95, such as 80 to 90; nickel sulfide .5 to 3, such as 1 to 2; and iron oxide 2 to 9, such as 3 to 6. The viscosity of this washing agent at 1093°C (2000°F) is again in the range of 1 to 2 $Ns/m^2$ (10 to 20 poises).

The washing agent washes from about 40 to 80 wt. %, such as 60 to 70 wt. %, of the vanadium-containing contaminants out of the partial oxidation gas generator. The use of the iron and calcium-containing additive in this manner to produce a washing agent is substantially different from the use of a calcium carbonate fluxing agent in coassigned U.S. Patent No. 4,277,365.

The remainder of the iron and calcium-containing additive unexpectedly combines with at least a portion e.g. 30 to 100 wt. %, say 50 to 80 wt. % of the remaining nickel, calcium and silicon in the reaction zone to generate a liquid oxide-silicate phase that fluxes e.g. dissolves substantially all of the remaining portions of said vanadium-containing oxide laths and spinels and other ash components to produce a substantially homogeneous slag. Ordinarily, silicon impurities are immiscible with high melting point vanadium species and will not flux them. However, this problem has been overcome by the subject invention. The liquid oxide-silicate phase has the following chemical composition in wt. %: calcium oxide 10 to 70, such as 20 to 50; calcium sulfide 0 to 1.0, such as 0.01 to 0.50; silicon dioxide 5 to 25, such as 1 to 10; nickel sulfide 0 to .5, such as .01 to .05; and minor ash components and refractory pick-up 2 to 10, such as 3 to 6. The slag formed with the liquid oxide-silicate comprises 1 to 10 wt. %, such as 3 to 7 wt. % of vanadium oxide.

As with additive A, benefits could be achieved by including, in the iron and calcium-containing additive, an additional material as described above and selected from the group of elements consisting of magnesium, chromium, manganese, and mixtures thereof. The elements are provided as suitable compounds selected from the groups consisting of oxides, hydroxides, carbonates, bicarbonates, sulfates, nitrates and mixtures thereof. The total amount of the compounds of magnesium, chromium, manganese and mixtures thereof in the additive may be in the range of 1.0 to 10.0 wt. %, such as 2.0 to 8.0 wt. % of the additives.

The addition of the aforesaid supplemental amount of magnesium and/or chromium compound saturates the slag with respect to these constituents thereby preventing their dissolution from the refractory. The life of the refractory lining is thereby extended. It was also unexpectedly found that the addition of a manganese compound increased the fluidity of the slag. Specifically, the addition of a manganese compound, such as a manganese oxide, resulted in lowering the ash fusion temperature and enhanced the fluidity of the oxide-silicate slag containing dissolved vanadium constituents.

The amounts of iron and calcium-containing additive B introduced into the reaction zone along with the fuel feedstock can be as described above with reference to additive A.

Advantageously by the subject process with additive B, two types of molten slag are produced in the reaction zone each having a low viscosity e.g. less than 2 Ns/m² (20 poises) at 1093°C (2000°F), in comparison with prior art high viscosity slag. This facilitates slag removal. Further, at shut-down of the gasifier, the refractory walls of the reaction zone are provided clean with substantially no net accumulation of vanadium contaminants.

The partial oxidation reaction takes place in a reducing atmosphere under conditions which can be those described above with reference to additive A, except that the temperature preferably does not exceed 1593°C(2900°F).

For additive B, the preferred iron and calcium compounds are those of iron described above as preferred for additive A.

The following Example II is offered as a better understanding of the present invention in relation to higher silicon feedstocks, but the invention is not to be construed as limited thereto.

## EXAMPLE II

Synthesis gas substantially comprises in mole % dry basis $H_2$ 25 to 45, CO 20 to 50, $CO_2$ 5 to 35, $CH_4$ 0.06 to 8.0, and $CO_2+H_2S$ 0.1 to 2.0 is produced in a free-flow refractory-lined partial oxidation reaction zone, such as that shown and described in U.S. Patent No. 3,607,157. The feedstock comprises an atomized aqueous dispersion or a dispersion of substantially dry petroleum coke having a nickel-and vanadium-containing ash and being entrained in a gaseous transport medium comprising a mixture of free-oxygen-containing gas and steam. The ash in the petroleum coke comprises about 12.0 wt. % of vanadium, about 5.0 wt. % of nickel and contains about 650 ppm of silicon. About 1.8 wt. % of sulfur is present in the petroleum coke. The petroleum coke has a nickel-and vanadium-containing ash and also has uniformly dispersed therein a mixture of iron and calcium-containing additive comprising 75.0 wt. % of FeO and 25.0 wt. % of CaO. The weight ratio of iron and calcium containing additive to ash is about 5 to 1. The weight ratio of iron plus calcium to vanadium in the reaction zone is about 25 to 1. In another run the petroleum coke having a nickel-and vanadium-containing ash and being in admixture with the iron-and calcium-containing additive is introduced into the free-flow partial oxidation zone as a pumpable slurry of petroleum coke in water. The solids content of the slurry is about 60 weight percent.

The petroleum coke is reacted with a free-oxygen containing gas e.g. air, oxygen-enriched air, substantially pure oxygen, in the presence of a temperature moderator, e.g. $H_2O$, $CO_2$, $N_2$, in the refractory-lined partial oxidation reaction zone at an autogenous temperature of about 1510°C (about 2750°F) and a pressure of about 6 atmospheres. The molten slag droplets are readily separated from the hot effluent gas stream leaving the reaction zone by gravity or by quenching and/or scrubbing the gas stream with water or other gas scrubbing medium. The ash fusion temperature-°C(°F) for the slag formed from the oxide-silicate fluid phase was as follows: initial deformation temperature - 1249 (2280), softening temperature 1282 (2340), and fluid temperature 1316 (2400). The viscosity of this slag was 15 poises at 1357°C (2475°F). The fluid temperature of the liquid washing agent and associated ash was below 1149°C (2100°F). In comparison, the ash fusion temperature of the coarse slag with no iron and calcium-containing additive was greater than 1510°C(2750°F). The chemical compositions of the two types of slag are shown in Table II below.

Table II – Chemical Composition of Two Slag Types

| Slag Types (produced from) | FeS | NiS | FeO | CaO | CaS | SiO₂ | V₂O₃ | Others[1] |
|---|---|---|---|---|---|---|---|---|
| A. Liquid Phase Washing Agent | 81.1 | 1.2 | 4.1 | 0.8 | 1.2 | 1.1 | 6.3 | 4.2 |
| B. Oxide-Silicate Phase | 9.8 | 0.01 | 34.2 | 31.7 | 0.9 | 13.1 | 5.9 | 5.3 |

[1]Minor ash components and refractory pick-up.

The photomicrograph of Figure 1 is typical of a cross-section of the Type A slag produced from the liquid phase washing agent which slag is similar to that generated in Example I above.

A photomicrograph (enlarged 500x) typical of a cross-section of the Type B slag produced from the liquid oxide-silicate phase with dissolved vanadium constituents is shown in the accompanying Figure 2.

## Claims

1. A process for the production of gaseous mixtures comprising $H_2+CO$ by the partial oxidation of a feedstock comprising a heavy liquid hydrocarbonaceous fuel having a nickel- and vanadium-containing ash or petroleum coke having a nickel- and vanadium-containing ash, or mixtures thereof; and said feedstock includes a minimum of 0.5 wt. % of sulfur; and said ash includes a minimum of 5.0 wt. % vanadium, a minimum of 2.0 wt. % of nickel, and silicon; said process being characterized by the steps of:

(1) mixing together with said feedstock, additive A comprising an iron-containing additive when the silicon content of said ash is less than about 350 ppm, or additive B comprising an iron- and calcium-containing additive when the silicon content of said ash is about 400 ppm or more, wherein the weight ratio of additive A or B to ash in the reaction zone in (2) is in the range of 1.0-10.0 to 1.0, and for each part by weight of vanadium there is at least 10 parts by weight of iron when additive A is used, or at least 10 parts by weight of iron plus calcium when additive B is used;

(2) reacting said mixture from (1) at a temperature in the range of 1200°C to 1650°C (2200°F to 3000°F) and a pressure in the range of 0.51 to 25.3 MPa (5 to 250 atmospheres) in a free-flow refractory-lined partial oxidation reaction zone with a gas which contains free oxygen in the presence of a temperature moderator and in a reducing atmosphere to produce a hot raw effluent gas stream comprising $H_2 + CO$ and entrained molten slag; and where in said reaction zone when additive A is used said iron-containing additive combines with at least a portion of said nickel constituents and sulfur found in the feedstock to produce a liquid phase washing agent that collects and transports at least a portion of the vanadium-containing oxide laths and spinels and other ash components and refractory out of the reaction zone; and when additive B is used separate portions of said iron- and calcium-containing additive (I) combine with a portion of said nickel, calcium and sulfur to generate a liquid phase washing agent that collects and transports a portion of the vanadium-containing oxide laths and spinels and other ash components and refractory; and (II) combine with a portion of said nickel, calcium and silicon to generate a liquid oxide-silicate phase that fluxes substantially all of the remaining portion of said vanadium-containing oxide laths and spinels and other ash components; and

(3) separating non-gaseous materials from said hot raw effluent gas stream.

2. A process according to Claim 1 wherein said heavy liquid hydrocarbonaceous fuel having a nickel- and vanadium-containing ash feedstock is selected from the group consisting of crude residue from petroleum distillation and cracking process operations, petroleum distillate, reduced crude, whole crude, asphalt, coal tar, coal derived oil, shale oil, tar sand oil, and mixtures thereof.

3. A process according to claim 1 or 2 wherein said heavy liquid hydrocarbonaceous fuel having a nickel- and vanadium-containing ash is a pumpable slurry of petroleum coke in water.

4. A process for the production of gaseous mixtures comprising $H_2+CO$ by the partial oxidation of a feedstock comprising a heavy liquid hydrocarbonaceous fuel having a nickel- and vanadium-containing ash or petroleum coke having a nickel- and vanadium-containing ash, or mixtures thereof; and said feedstock includes a minimum of 0.5 wt. % of sulfur; and said ash includes a minimum of 5.0 wt. % vanadium, a minimum of 2.0 wt. % of nickelåd silicon; said process comprising:

(1) mixing together with said feedstock, additive A comprising an iron-containing ad.ditive when the silicon content of said ash is less than about 350 ppm, or additive comprising an iron- and calcium-containing additive when the silicon content of said ash is about 400 ppm or more; wherein the weight ratio of additive A or B to ash in the reaction zone in (2) is in the range of 1.0-10.0 to 1.0, and for each part by weight of vanadium there is at least 10 parts by weight of iron when additive A is used, or at least 10 parts by weight of iron plus calcium when additive B is used;

(2) coking said mixture from (1) to produce petroleum coke having a nickel- and vanadium-containing ash and having dispersed therein said additive A or B;

(3) introducing the petroleum coke from (2) into a partial oxidation reaction zone as a pumpable slurry of petroleum coke in water, liquid hydrocarbonaceous fluid or mixtures thereof, or as substantially dry petroleum coke entrained in a gaseous transport medium;

(4) reacting said petroleum coke from (3) at a temperature in the range of 1200°C to 1650°C (2200°F to 3000°F) and a pressure in the range of 0.51 to 25.3 MPa (5 to 250 atmospheres) in said free-flow refractory-lined partial oxidation reaction zone with a gas containing free oxygen in the presence of a temperature moderator and in a reducing atmosphere to produce a hot raw effluent gas stream comprising $H_2 + CO$ and entrained molten slag; and where in said reaction zone when additive A is used said iron-containing additive combines with at least a portion of said nickel constituents and sulfur found in the feedstock to produce a liquid phase washing agent that collects and transports at least a portion of the vanadium-containing oxide laths and spinels and other ash components and refractory out of the reaction zone; and when additive B is used separate portions of said iron- and calcium-containing additive (I) combine with a portion of said nickel, calcium and sulfur to generate a liquid phase washing agent that collects and transports a portion of the vanadium-containing oxide laths and spinels and other ash components and refractory; and (II) combine with a portion of said nickel, calcium and silicon to generate a liquid oxide-silicate phase that fluxes substantially all of the remaining portion of said vanadium-containing oxide laths and spinels and other ash components; and

(5) separating non-gaseous materials from said hot raw effluent gas stream.

5. A process according to Claim 4 wherein said ash-containing heavy liquid hydrocarbonaceous fuel is a high boiling liquid petroleum feed to or the bottoms from a vacuum tower or a fractionator.

6. A process according to Claim 4 or 5, in step (2) of which, the mixture from step (1) is introduced at a temperature in the range of from 340°C to 500°C (about 650°F to 930°F) into a delayed coking zone where at a temperature in the range of from 430°C to 480°C (about 800°F to 895°F) and a pressure in the range of from 3.31 to 9.93 bar (about 20 to 60 psig), uncondensed hydrocarbon effluent vapour and steam are removed overhead and said petroleum coke having a nickel- and vanadium-containing ash and having uniformly dispersed therein said iron containing additive is removed from the bottom.

7. A process according to Claim 4 or 5, in step (2) of which, the mixture from step (1) is introduced at a temperature in the range of from 290°C to 400°C (about 550°F to 750°F into a fluidized bed coking zone where at a temperature in the range of from 540°C to 650°C about 1000°F to 1200°F) and a pressure in the range of from 1.65 to 3.31 bar (about 10 to 20 psig), uncondensed hydrocarbon effluent vapour and steam are removed overhead and said petroleum coke is removed from the bottom.

8. A process according to any one of the preceding claims wherein said additive A or B contains iron compounds selected from the group consisting of oxides, sulfides, sulfates, carbonates, cyanides, chlorides, nitrates and mixtures thereof.

9. A process according to any one of the preceding claims wherein the additive A or B comprises a ferro or ferri organic compound selected from the group consisting of naphthenates, oxalates, acetates, citrates, benzoates, oleates, tartrates, and mixtures thereof.

10. A process according to any one of the preceding claims wherein the additive A or B is a water-soluble iron salt.

11. A process according to any one of the preceding claims including the step of introducing said additive A or B into the feed to or the bottoms from a vacuum distillation unit, in order to effect said step of mixing.

12. A process according to any one of the preceding claims wherein said mixture of additive A or B and feedstock which is the product of mixing step (1) has a particle size not larger than that defined by ASTM E-11 Standard Sieve Designation of 210 micronmeters.

13. A process according to any one of the preceding claims wherein at least 30.0 wt. % of the additive A or B is constituted by an iron compound.

14. A process according to any one of the preceding claims including the step of mixing in step (1) sufficient of additive A or B to permit conversion of substantially all of the sulfur in said feedstock into the sulfides of iron and nickel, so that said sulfur may leave the reaction zone in the slag.

15. A process according to any one of the preceding claims in which additive A is used and including the steps of a) introducing a calcium compound in the amount of from 2.0 to 8.0 wt. % of said iron-containing addition agent A into the reaction zone of the partial oxidation reaction zone at start-up to reduce the softening temperature of the iron-containing addition agent, and b) discontinuing step a) after start-up.

16. A process according to claim 15 wherein said additive A or B is iron oxide; and said iron oxide is in admixture with calcium oxide.

17. A process according to any one of the preceding claims including the further step of modifying the additive A or B by the addition to it of one or both of magnesium and chromium.

18. A process according to claim 17 wherein said magnesium and/or chromium is provided as compounds and in a total amount of from 1.0 to 10.0 wt. % of said additive.

19. A process according to claim 18 wherein said magnesium and chromium compounds are oxides.

20. A process according to any one of the preceding claims wherein said liquid phase washing agent contains the following constituents in substantially the following wt. % ranges: iron sulfide from 75 to 95, nickel sulfide from 0.5 to 3.0, and iron oxide from 2 to 9.

21. A process according to any one of the preceding claims wherein additive B comprises from 30.0 to 90.0 wt. 20 % of an iron compound and the remainder substantially comprises a calcium compound.

22. A process according to any one of the preceding claims including the further step of modifying additive B by the addition to it of at least one of magnesium, chromium and manganese in the total amount of about 1.0 to 10.0 wt. % of the additive.

23. A process according to any one of the preceding claims wherein additive B is used, and additive B contains manganese oxide.

## Patentansprüche

1. Verfahren für die Herstellung von gasförmigen Gemischen, die $H_2+CO$ umfassen, durch die Teiloxidation eines Ausgangsmaterials, das einen schwerflüssigen kohlenwasserstoffhaltigen Brennstoff mit einer nickel- und vanadinhaltigen Asche oder Erdölkoks mit einer nickel- und vanadinhaltigen Asche oder Mischungen derselben umfaßt: wobei besagtes Ausgangsmaterial ein Minimum von 0,5 Gew.-%

Schwefel enthält: und besagte Asche ein Minimum von 0,5 Gew.-% Vanadin, ein Minimum von 2,0 Gew.-% Nickel und Silizium enthält: gekennzeichnet durch die folgenden Schritte:

(1) Zusammenmischen eines Additivs A, das ein eisenhaltiges Additiv umfaßt, wenn der Siliziumgehalt besagter Asche geringer ist als etwa 350 ppm, oder eines Additivs B, das ein eisen- und kalziumhaltiges Additiv umfaßt, wenn der Siliziumgehalt besagter Asche etwa 400 ppm oder mehr ist, mit besagtem Ausgangsmaterial, wobei das Gewichtsverhältnis von Additiv A oder B zu Asche in der Reaktionszone in (2) im Bereich von 1,0–10,0 zu 1,0 liegt und es für jedes Gewichtsteil Vanadin wenigstens 10 Gewichtsteile Eisen gibt, wenn Additiv A verwendet wird, oder wenigstens 10 Gewichtsteile Eisen plus Kalzium, wenn Additiv B verwendet wird;

(2) Umsetzen besagter Mischung aus (1) bei einer Temperatur im Bereich von 1200° C bis 1650° C (2200° F bis 3000° F) und einem Druck im Bereich von 0,51 bis 25,3 MPa (5 bis 250 Atmosphären) in einer feuerfest ausgekleideten Freifluß-Teiloxidations-Reaktionszone mit einem Gas, das freien Sauerstoff enthält, in Gegenwart eines Temperaturmoderators und in einer reduzierenden Atmosphäre, um einen heißen abgehenden Rohgasstrom, der $H_2 + CO$ und mitgerissene geschmolzene Schlacke umfaßt, herzustellen; und wo in besagter Reaktionszone, wenn Additiv A verwendet wird, besagtes eisenhaltiges Additiv sich mit wenigstens einem Teil besagter Nickelbestandteile und besagten Schwefels, die im Ausgangsmaterial vorliegen, verbindet, um ein Flüssigphasen-Waschmittel zu ergeben, das wenigstens einen Teil der vanadinhaltigen Oxidleisten und Spinelle und anderen Aschebestandteile und feuerfesten Materialien aus der Reaktionszone heraus transportiert; und wenn Additiv B verwendet wird, separate Teile besagten eisen- und kalziumhaltigen Additivs (I) sich mit einem Teil besagten Nickels, Kalziums und Schwefels verbinden, um ein Flüssigphasen-Waschmittel zu erzeugen, das einen Teil der vanadinhaltigen Oxidleisten und Spinelle und anderen Aschebestandteilen und feuerfesten Materialien sammelt und transportiert; und (II) sich mit einem Teil besagten Nickels, Kalziums und Siliziums verbinden, um eine flüssige Oxid-Silikat-Phase zu erzeugen, die im wesentlichen den gesamten restlichen Teil besagter vanadinhaltiger Oxidleisten und Spinelle und anderer Aschebestandteile schmilzt; und

(3) Abtrennen nicht-gasförmiger Materialien aus besagtem heißen abgehenden Rohgasstrom.

2. Verfahren nach Anspruch 1, dadurch gekennzeichnet, daß besagter schwerflüssiger kohlenwasserstoffhaltiger Brennstoff mit einem nickel- und vanadinhaltigen Ascheeintrag aus der Gruppe ausgewählt ist, die aus Rohrückstand aus Erdöl-Destillations- und Crackverfahrensvorgängen, Erdöldestillat, abgetopptem Rohöl, Vollrohöl, Asphalt, Kohlenteer, von Kohle derivatisiertem Öl, Schieferöl, Teersandöl und Mischungen derselben besteht.

3. Verfahren nach Anspruch 1 oder 2, dadurch gekennzeichnet, daß besagter schwerflüssiger kohlenwasserstoffhaltiger Brennstoff mit einer nickel- und vanadinhaltigen Asche eine pumpbare Aufschlämmung von Erdölkoks in Wasser ist.

4. Verfahren zur Herstellung von gasförmigen Gemischen, die $H_2+CO$ umfassen, durch die Teiloxidation eines Ausgangsmaterials, das einen schwerflüssigen kohlenwasserstoffhaltigen Brennstoff mit einer nickel- und vanadinhaltigen Asche oder Erdölkoks mit einer nickel- und vanadinhaltigen Asche oder Mischungen derselben umfaßt; wobei besagtes Ausgangsmaterial ein Minimum von 0,5 Gew.-% Schwefel enthält; und besagte Asche ein Minimum von 5,0 Gew.-% Vanadin, ein Minimum von 2,0 Gew.-% Nickel und Silizium enthält: gekennzeichnet durch

(1) Zusammenmischen eines Additivs A, das ein eisenhaltiges Additiv umfaßt, wenn der Siliziumgehalt besagter Asche geringer ist als etwa 350 ppm, oder eines Additivs B, das ein eisen- und kalziumhaltiges Additiv umfaßt, wenn der Siliziumgehalt besagter Asche etwa 400 ppm oder mehr ist, mit besagtem Ausgangsmaterial, wobei das Gewichtsverhältnis von Additiv A oder B zu Asche in der Reaktionszone in (2) im Bereich von 1,0–10,0 zu 1,0 liegt und es für jedes Gewichtsteil Vanadin wenigstens 10 Gewichtsteile Eisen gibt, wenn Additiv A verwendet wird, oder wenigstens 10 Gewichtsteile Eisen plus Kalzium, wenn Additiv B verwendet wird:

(2) Verkoken besagter Mischung aus (1), um Erdölkoks herzustellen, der eine nickel- und vanadinhaltige Asche aufweist und in sich besagtes Additiv A oder B dispergiert enthält;

(3) Einführen des Erdölkoks aus (2) in eine Teiloxidations-Reaktionszone als eine pumpbare Aufschlämmung von Erdölkoks in Wasser, flüssiges kohlenwasserstoffhaltiges Fluid oder Mischungen derselben oder als im wesentlichen trockener Erdölkoks, der in einem gasförmigen Transportmedium mitgerissen wird;

(4) Umsetzen besagten Erdölkoks aus (3) bei einer Temperatur im Bereich von 1200° C bis 1650° C (2200° F bis 3000° F) und einem Druck im Bereich von 0,51 bis 25,3 MPa (5 bis 250 Atmosphären) in besagter mit feuerfestem Material ausgekleideten Freifluß-Teiloxidations-Reaktionszone mit einem Gas, das freien Sauerstoff enthält, in Gegenwart eines Temperaturmoderators und in einer reduzierenden Atmosphäre, um einen heißen abgehenden Rohgasstrom, der $H_2 + CO$ und mitgerissene geschmolzene Schlacke umfaßt, herzustellen; und wo in besagter Reaktionszone, wenn Additiv A verwendet wird, besagtes eisenhaltiges Additiv sich mit wenigstens einem Teil besagter Nickelbestandteile und besagten Schwefels, die im Ausgangsmaterial vorliegen, verbindet, um ein Flüssigphasen-Waschmittel zu ergeben, das wenigstens einen Teil der vanadinhaltigen Oxidleisten und Spinelle und anderen Aschebestandteile und feuerfesten Materialien sammelt und aus der Reaktionszone heraus transportiert; und wenn Additiv B verwendet wird, separate Teile besagten eisen- und kalziumhaltigen

EP 0 209 261 B1

Additivs (I) sich mit einem Teil besagten Nickels, Kalziums und Schwefels verbinden, um ein Flüssigphasen-Waschmittel zu erzeugen, das einen Teil der vanadinhaltigen Oxidleisten und Spinelle und anderen Aschebestandteile und feuerfesten Materialien sammelt und transportiert; und (II) sich mit einem Teil besagten Nickels, Kalziums und Siliziums verbinden, um eine flüssige Oxid-Silikat-Phase zu erzeugen, die im wesentlichen den gesamten restlichen Teil besagter vanadinhaltiger Oxidleisten und Spinelle und anderer Aschebestandteile schmilzt; und

(5) Abtrennen nicht-gasförmiger Materialien aus besagtem heißen abgehenden Rohgasstrom.

5. Verfahren nach Anspruch 4, dadurch gekennzeichnet, daß besagter aschehaltiger schwerflüssiger kohlenwasserstoffhaltiger Brennstoff ein hochsiedender flüssiger Erdöleintrag für oder das Sumpfprodukt aus einer Vakuumdestillationskolonne oder einer Fraktionierkolonne ist.

6. Verfahren nach Anspruch 4 oder 5, dadurch gekennzeichnet, daß in Stufe (2) die Mischung aus Stufe (1) bei einer Temperatur im Bereich von 340° C bis 500° C (etwa 650° F bis 930° F) in eine Delayed-Coking-Zone eingeführt wird, wo bei einer Temperatur im Bereich von 430° C bis 480° C (etwa 800° F bis 895° F) und einem Druck im Bereich von 3,31 bis 9,93 bar (etwa 20 bis 60 psig) nicht-kondensierter abgehender Kohlenwasserstoffdampf und Wasserdampf über Kopf abgezogen werden und besagter Erdölkoks, der eine nickel- und vanadinhaltige Asche aufweist und in sich besagtes eisenhaltiges Additiv gleichmäßig dispergiert enthält, vom Boden abgezogen wird.

7. Verfahren nach Anspruch 4 oder 5, dadurch gekennzeichnet, daß in Schritt (2) die Mischung aus Schritt (1) bei einer Temperatur im Bereich von 290° C bis 400° C (etwa 550° F bis 750° F) in eine Fließbett-Verkokungszone eingebracht wird, wo bei einer Temperatur im Bereich von 540° C bis 650° C (etwa 1000° F bis 1200° F) und einem Druck im Bereich von 1,65 bis 3,31 bar (10 bis 20 psig) nicht-kondensierter abgehender Kohlenwasserstoffdampf und Wasserdampf über Kopf abgezogen werden und besagter Erdölkoks vom Boden abgezogen wird.

8. Verfahren nach einem der vorangehenden Ansprüche, dadurch gekennzeichnet, daß besagtes Additiv A oder B Eisenverbindungen enthält, die aus der Gruppe ausgewählt sind, die aus Oxiden, Sulfiden, Sulfaten, Karbonaten, Zyaniden, Chloriden, Nitraten und Mischungen derselben besteht.

9. Verfahren nach einem der vorangehenden Ansprüche, dadurch gekennzeichnet, daß das Additiv A oder B eine organische Ferro- oder Ferriverbindung umfaßt, die aus der Gruppe ausgewählt ist, die aus Naphthenaten, Oxalaten, Acetaten, Zitraten, Benzoaten, Oleaten, Tartraten und Mischungen derselben besteht.

10. Verfahren nach einem der vorangehenden Ansprüche, dadurch gekennzeichnet, daß das Additiv A oder B ein wasserlösliches Eisensalz ist.

11. Verfahren nach einem der vorangehenden Ansprüche, dadurch gekennzeichnet, daß besagtes Additiv A oder B in den Eintrag für oder das Sumpfprodukt aus einer Vakuumdestillationseinheit eingebracht wird, um besagten Mischungsschritt zu bewirken.

12. Verfahren nach einem der vorangehenden Ansprüche, dadurch gekennzeichnet, daß besagte Mischung von Additiv A oder B und dem Ausgangsmaterial, welche das Produkt des Mischungsschrittes (1) ist, eine Teilchengröße aufweist, die nicht größer ist als diejenige, die durch die ASTM E-11 Standard Sieve Designation von 210 μm festgelegt ist.

13. Verfahren nach einem der vorangehenden Ansprüche, dadurch gekennzeichnet, daß wenigstens 30 Gew.-% des Additivs A oder B von einer Eisenverbindung dargestellt werden.

14. Verfahren nach einem der vorangehenden Ansprüche, dadurch gekennzeichnet, daß in Schritt (1) genügend Additiv A oder B eingemischt wird, um die Umwandlung von im wesentlichen dem gesamten Schwefel in besagtem Ausgangsmaterial in die Sulfide von Eisen und Nickel zu ermöglichen, so daß besagter Schwefel die Reaktionszone in der Schlacke verlassen kann.

15. Verfahren nach einem der vorangehenden Ansprüche, dadurch gekennzeichnet, daß Additiv A verwendet wird und daß es die Schritte a) des Einbringens einer Kalziumverbindung in der Menge von 2,0 bis 8,0 Gew.-% besagten eisenhaltigen Zusatzstoffes A in die Reaktionszone der Teiloxidations-Reaktionszone beim Anfahren, um die Erweichungstemperatur des eisenhaltigen Zusatzstoffes abzusenken, und b) des Unterbrechens von Schritt a) nach dem Anfahren einschließt.

16. Verfahren nach Anspruch 15, dadurch gekennzeichnet, daß Additiv A oder B Eisenoxid ist; und daß besagtes Eisenoxid in Beimischung mit Kalziumoxid ist.

17. Verfahren nach einem der vorangehenden Asprüche, gekennzeichnet durch den weiteren Schritt des Modifizierens von Additiv A oder B durch das Zusetzen von einem oder beiden der Stoffe Magnesium und Chrom.

18. Verfahren nach Anspruch 17, dadurch gekennzeichnet, daß Magnesium und/oder Chrom in Form von Verbindungen und in einer Gesamtmenge von 1,0 bis 10,0 Gew.-% besagten Additivs zur Verfügung gestellt wird.

19. Verfahren nach Anspruch 18, dadurch gekennzeichnet, daß besagte Magnesium- und Chromverbindungen Oxide sind.

20. Verfahren nach einem der vorangehenden Ansprüche, dadurch gekennzeichnet, daß besagtes Flüssigphasen-Waschmittel die folgenden Bestandteile in im wesentlichen den folgenden Gewichts-%-Bereichen enthält: Eisensulfid von 75 bis 95, Nickelsulfid von 0,5 bis 3,0 und Eisenoxid von 2 bis 9.

21. Verfahren nach einem der vorangehenden Ansprüche, dadurch gekennzeichnet, daß Additiv B von 30,0 bis 90,0 Gew.-% einer Eisenverbindung umfaßt und der Rest im wesentlichen eine Kalziumverbindung umfaßt.

22. Verfahren nach einem der vorangehenden Ansprüche, gekennzeichnet durch den weiteren Schritt des Modifizierens von Additiv B durch das Zusetzen von wenigstens einem der Stoffe Magnesium, Chrom und Mangan in der Gesamtmenge von 1,0 bis 10,0 Gew.-% des Additivs.

23. Verfahren nach einem der vorangehenden Ansprüche, dadurch gekennzeichnet, daß Additiv B verwendet wird und Additiv B Manganoxid enthält.

## Revendications

1. Procédé pour la production de mélanges gazeux comprenant $H_2+CO$ par oxydation partielle d'une charge d'alimentation comprenant un combustible hydrocarboné liquide lourd ayant une cendre contenant du nickel et du vanadium ou un coke de pétrole ayant une cendre contenant du nickel et du vanadium, ou des mélanges de ceux-ci; et cette charge d'alimentation contient un minimum de 0,5% en poids de soufre; et cette cendre contient un minimum de 5,0% en poids de vanadium, un minimum de 2,0% en poids de nickel, et du silicium; ce procédé étant caractérisé par les étapes de:

(1) mélange avec cette charge d'alimentation d'un additif A comprenant un additif contenant du fer lorsque la teneur en silicium de cette cendre est inférieure à environ 350 ppm, ou un additif B contenant du fer et du calcium lorsque la teneur en silicium de cette cendre est d'environ 400 ppm ou davantage, dans lequel le rapport pondéral de l'additif A ou B à la cendre dans la zone de réaction dans (2) est dans l'intervalle de 1,0–10,0, à 1,0, et, pour chaque partie en poids de vanadium, il y a au moins 10 parties en poids de lorsqu'on utilise l'additif A, ou au moins 10 parties en poids de fer plus calcium lorsqu'on utilise l'additif B,

(2) réaction de ce mélange (1) à une température dans l'intervalle de 1200°C à 1650°C (2200°F à 3000°F) et sous une pression dans l'intervalle de 0,51 à 25,3 mPa (5 à 250 atmosphères) dans une zone de réaction à oxydation partielle, revêtue de réfractaire, à écoulement libre, avec un gaz qui contient de l'oxygène libre, en présence d'on modérateur de température et en atmosphère réductrice pour produire un courant de gaz effluent brut chaud comprenant $H_2+CO$ et du laitier fondu entraîné, et dans lequel, dans cette zone de réaction, lorsqu'on utilise l'additif A, cet additif contenant du fer se combine avec une partie de ces constituants de nickel et de ce soufre dans la charge d'alimentation pour produire un agent de lavage en phase liquide qui recueille et transporte au moins une partie des lattes et spinelles d'oxyde contenant du vanadium et d'autres constituants de la cendre et du réfractaire hors de la zone de réaction; et lorsqu'on utilise l'additif B, des portions séparées de cet additif contenant du fer et du calcium (I) se combinent avec une portion de ce nickel, de ce calcium et de ce soufre pour produire un agent de lavage en phase liquide qui recueille et transporte une portion des lattes et spinelles d'oxyde contenant du vanadium et d'autres constituants de la cendre et du réfractaire; et (II) se combinent avec une portion de ce nickel, de ce calcium et de ce silicium pour produire une phase oxyde-silicate liquide qui fluidifie la quasi-totalité de la portion restante de ces lattes et spinelles d'oxyde contenant du vanadium et d'autres constituants de la cendre; et de:

(3) séparation des matières non gazeuses de ce courant de gaz effluent brut chaud.

2. Procédé suivant la revendication 1, dans lequel cette charge d'alimentation de combustible hydrocarboné liquide lourd ayant une cendre contenant du nickel et du vanadium est choisi dans le groupe constitué d'un résidu brut de distillation du pétrole et d'opérations de craquage, d'un distillat de pétrole, d'un brut réduit, d'un brut entier, d'un asphalte, d'un goudron, d'une huile dérivée du goudron, d'une huile de schiste, d'une huile de sable asphaltique, et de mélanges de ceux-ci.

3. Procédé suivant les revendications 1 et 2, dans lequel ce combustible hydrocarboné liquide lourd ayant une cendre contenant du nickel et du vanadium est une bouillie pompable de coke de pétrole dans de l'eau.

4. Procédé pour la production de mélanges gazeux comprenant $H_2+CO$ par oxydation partielle d'une charge d'alimentation comprenant un combustible hydrocarboné liquide lourd ayant une cendre contenant du nickel et du vanadium ou un coke de pétrole ayant une cendre contenant du nickel et du vanadium, ou de mélanges de ceux-ci; et cette charge d'alimentation contient un minimum de 0,5% en poids de soufre; et cette cendre contient un minimum de 5,0% en poids de vanadium, un minimum de 2,0% en poids de nickel du silicium; ce procédé comprenant:

(1) le mélange avec cette charge d'alimentation d'un additif A comprenant un additif contenant du fer lorsque la teneur en silicium de cette cendre est inférieure à environ 350 ppm ou un additif B comprenant un additif contenant du fer et du calcium lorsque la teneur en silicium de cette cendre est d'environ 400 ppm ou davantage; dans lequel le rapport pondéral de l'additif A ou B à la cendre dans la zone de réaction dans (2) est dans l'intervalle de 1,0 à 10,0, et pour chaque partie en poids de vanadium, il y a au moins 10 parties en poids de fer lorsqu'on utilise l'additif A ou au moins 10 parties en poids de fer plus calcium lorsqu'on utilise l'additif A ou au moins 10 parties en poids de fer plus calcium lorsqu'on utilise l'additif B;

(2) cokéfaction de ce mélange (1) pour produire un coke de pétrole ayant une cendre contenant du nickel et du vanadium et dans laquelle est dispersé cet additif A ou B;

(3) introduction du coke de pétrole provenant de (2) dans une zone de réaction d'oxydation partielle sous la forme d'une bouillie pompable de coke de pétrole dans de l'eau, d'un fluide hydrocarboné liquide ou de mélanges de ceux-ci, ou sous la forme d'un coke de pétrole pratiquement sec entraîné dans un milieu de transport gazeux;

(4) réaction de ce coke de pétrole provenant de (3) à une température dans l'intervalle de 1200°C à 1650°C (2200°F à 3000°F) et sous une pression dans l'intervalle de 0,51 à 25,3 MPa (5 à 250 atmosphères) dans cette zone de réaction d'oxydation partielle revêtue de réfractaire, à écoulement libre, avec un gaz contenant de l'oxygène libre en présence d'un modérateur de température et en atmosphère réductrice, pour produire un courant de gaz effluent brut chaud comprenant $H_2+CO$ et du laitier fondu entraîné; et dans lequel, dans cette zone de réaction, lorsqu'on utilise l'additif A, cet additif contenant du fer se combine avec au moins une portion de ces constituants de nickel et le soufre se trouvant dans la charge d'alimentation pour produire un agent de lavage en phase liquide qui recueille et transporte au moins une portion des lattes est spinelles d'oxyde contenant du vanadium et des autres constituants de la cendre et du réfractaire hors de la zone de réaction; et lorsqu'on utilise l'additif B, des portions séparées de cet additif (I) contenant du fer et du calcium se combinent avec une portion de ce nickel, de ce calcium ou de ce soufre pour produire un agent de lavage en phase liquide qui recueille et transporte une portion des lattes et spinelles d'oxyde du vanadium et d'autres constituants de la cendre et du réfractaire; et (II) se combinent avec une portion de ce nickel, de ce calcium et de ce silicium pour produire une phase oxyde-silicate liquide qui fluidifie la quasi-totalité de la portion restante de ces lattes et spinelles d'oxyde contenant du vanadium et d'autres constituants de la cendre; et

(5) séparation des matières non gazeuses de ce courant de gaz effluent brut chaud.

5. Procédé suivant la revendication 4, dans lequel ce combustible hydrocarboné liquide lourd contenant de la cendre est une alimentation en pétrole liquide de point d'ébullition élevé à une tour à vide ou une colonne de fractionnement, ou les queues de distillation en ressortant.

6. Procédé suivant les revendications 4 ou 5, dans l'étape (2) duquel le mélange de l'étape (1) est introduit à une température dans l'intervalle de 340°C à 500°C (environ 650°F à 930°C) dans une zone de cokéfaction différée dans laquelle, à une température dans l'intervalle de 430°C à 480°C (environ 800°F à 895°F) et sous une pression dans l'intervalle de 3,31 à 9,93 bars (20 à 60 psig), une vapeur d'effluent hydrocarboné non condensé et de la vapeur d'eau sont éliminés en tête et ce coke de pétrole ayant une cendre contenant du nickel et du vanadium et dans lequel est uniformément dispersé cet additif contenant du fer est soutiré du bas.

7. Procédé suivant les revendications 4 ou 5, dans l'étape (2) duquel le mélange provenant de l'étape (1) est introduit à une température dans l'intervalle de 290°C à 400°C (environ 550°F à 750°F) dans une zone de cokéfaction à lit fluidisé dans laquelle, à une température dans l'Intervalle de 540°C à 640°C (environ 1000°F à 1200°F) et sous une pression dans l'intervalle de 1,65 à 3,31 bars (environ 10 à 20 psig), une vapeur d'effluent hydrocarboné non condensé et de la vapeur d'eau sont éliminées en tête et ce coke de pétrole est éliminé du bas.

8. Procédé suivant l'une quelconque des revendications précédentes, dans lequel cet additif A ou B contient des composés du fer choisis dans le groupe constitué des oxydes, sulfures, sulfates, carbonates, cyanures, chlorures, nitrates et de mélanges de ceux-ci.

9. Procédé selon l'une quelconque des revendications précédentes dans lequel l'additif A ou B comprend un composé organique ferreux ou ferrique choisi dans le groupe comprenant des naphténates, oxalates, acétates, citrates, benzoates, oléates, tartrates et leurs mélanges.

10. Pocédé selon l'une quelconque des revendications précédentes, dans l'additif A ou B est un sel de fer soluble dans l'eau.

11. Procédé selon l'une quelconque des revendications précédentes comportant l'étape d'introduction dudit additif A ou B dans la charge d'alimentation à une tour de distillation sous vide ou vers les queues de distillation en ressortant, afin d'effectuer ladite étape de mélange.

12. Procédé selon l'une quelconque des revendications précédentes, dans lequel ledit mélange d'additif A ou B et la charge d'alimentation qui est le produit de l'étape de mélange (1) a une taille de particule qui n'est pas supérieure à celle définie par les normes ASTM E-11 relatives aux tamis de 210 μm.

13. Procédé selon l'une quelconque des revendications précédentes, dans lequel au moins 30,0% en poids de l'additif A ou B est constitué d'un composé du fer.

14. Procédé selon l'une quelconque des revendications précédentes comportant l'étape du mélange dans l'étape (1) de suffisamment d'additif A ou B pour permettre la transformation de pratiquement tout le soufre dans la charge d'alimentation en sulfures de fer et de nickel, de telle sorte que ledit soufre puisse quitter la zone de réaction dans le laitier.

15. Procédé selon l'une quelconque des revendications précédentes dans lequel l'additif A est utilisé et comprend les étapes de a) introduction d'un composé du clacium en quantité comprise entre 2,0 et 8,0% en poids dudit agent d'addition A contenant du fer dans la zone de réaction de la zone de réaction d'oxydation partielle au démarrage pour réduire la température d'adoucissement de l'agent d'addition contenant du fer, et b) interruption de l'étape a) après démarrage.

16. Procédé selon la revendication 15, dans lequel ledit additif A ou B est de l'oxyde de fer; et ledit oxyde de fer se présente en mélange avec de l'oxyde de calcium.

17. Procédé selon l'une quelconque des revendications précédentes comportant en outre l'étape de modification de l'additif A ou B en y ajoutant du magnésium ou du chrome ou les deux à la fois.

18. Procédé selon la revendication 17 dans lequel ledit magnésium et/ou chrome est fourni en tant que produit et en quantité comprise entre 1,0 et 10,0% en poids dudit additif.

19. Procédé selon la revendication 18, dans lequel lesdits composés de magnésium et de chrome sont des oxydes.

20. Procédé selon l'une quelconque des revendications précédentes, dans lequel ledit agent de lavage en phase liquide contient les constituants suivants pratiquement avec les gammes en % suivantes: sulfure de fer de 75 à 95, sulfure de nickel de 0,5 à 3,0, et oxyde de fer de 2 à 9.

21. Procédé selon l'une quelconque des revendications précédentes dans lequel l'additif B contient de 30,0 à 90,0% en poids d'un composé de fer et le reste contient essentiellement un composé de calcium.

22. Procédé selon l'une quelconque des revendications précédentes comportant en outre l'étape de modification de l'additif B en y ajoutant au moins du magnésium, du chrome et du manganèse en quantité totale comprise entre 1,0 et 10,0% en poids de l'additif.

23. Procédé selon l'une quelconque des revendications précédentes, caractérisé en ce que l'additif B est utilisé, et l'additif B contient de l'oxyde de manganèse.

FIG.1

FIG.2